# EUROPEAN PATENT APPLICATION

(11) **EP 1 443 515 A2**
(43) Date of publication of application: **04.08.2004**
(21) Application number: 04001981.2
(22) Date of filing: 29.01.2004
(51) Int. Cl.: G11B 27/031

(54) **Recording and reproducing apparatus**

(30) Priority: 31.01.2003 JP 2003024859
(71) Applicant: Kabushiki Kaisha Toshiba, Tokyo 105-8001 (JP)
(72) Inventor: Izawa, Hidehito Toshiba Corporation, 1-chome Minato-ku Tokyo 105-8001 (JP)
(74) Representative: Henkel, Feiler & Hänzel

(57) **Abstract**

A recording and reproducing apparatus comprises a connecting section (17, 24) configured to allow external AV equipment (11, 12) to be controllably connected to the recording and reproducing apparatus, a selecting section (15, 20) configured to select one (27, 37) of recording media possessed by the external AV equipment (11, 12), via the connecting section (17, 24), and a control section (30, 36) configured to record or reproduce AV information, via the connecting section (17, 24), on or from the recording medium (27, 37) selected by the selecting section (15, 20).

## Description

The present invention relates to a recording and reproducing apparatus, and in particular, to a recording and reproducing apparatus in which audio visual (AV) equipment having a reproducing function is connected to AV equipment having a recording function to provide multiple functions.

As is well-known, a portable recording medium (hereinafter referred to as a "removable medium") such as a memory card must be used in order to allow AV equipment having a reproducing function to reproduce AV information recorded on stationary AV equipment installed in a user's home or the'like and having a recording and reproducing function.

That is, it is necessary to install a removable medium in stationary AV equipment to record AV information in the removable medium, then remove the removable medium from the stationary AV equipment, and then install the medium in the portable AV equipment to reproduce the AV information. It is thus cumbersome for the user to handle these pieces of equipment.

Jpn. Pat. Appln. KOKAI Publication No. 2001-357618 discloses an arrangement in which content being reproduced by one of two apparatuses can be reproduced by the other apparatus without transferring the recording medium. However, Jpn. Pat. Appln. KOKAI Publication No. 2001-357618 requires that the content reproduced by one of the apparatuses be transferred and copied to the other apparatus beforehand. It is thus cumbersome for the user to handle these apparatuses.

Furthermore, Jpn. Pat. Appln. KOKAI Publication No. 2000-105969 discloses an arrangement that operates when storing data read from a recording medium, on another recording medium, to determine whether or not this recording is possible on the basis of the time required to reproduce the data and the remaining time available for storing the data in the destination storage medium. However, Jpn. Pat. Appln. KOKAI Publication No. 2000-105969 does not contain any descriptions of the reproduction of information recorded in one of the apparatuses, by the other apparatus.

The present invention is provided in view of these circumstances. It is an object of the present invention to provide a recording and reproducing apparatus in which AV equipment having a reproducing function is connected to AV equipment having a recording function to provide various functions that cannot be implemented by the single piece of equipment.

According to one aspect of the present invention, there is provided a recording and reproducing apparatus comprising: a connecting section configured to allow external AV equipment to be controllably connected to the recording and reproducing apparatus; a selecting section configured to select one of recording media possessed by the external AV equipment, via the connecting section; and a control section configured to record or reproduce AV information, via the connecting section, on or from the recording medium selected by the selecting section.

This summary of the invention does not necessarily describe all necessary features so that the invention may also be a sub-combination of these described features.

The invention can be more fully understood from the following detailed description when taken in conjunction with the accompanying drawings, in which:
FIG. 1 is a perspective view showing an embodiment of the present invention and illustrating the appearance of an AV system;
FIG. 2 is a block diagram illustrating the details of signal processing systems in portable AV equipment and stationary AV equipment according to this embodiment;
FIG. 3 is a flowchart illustrating an example of an operation of the AV system according to this embodiment;
FIGS. 4A and 4B are diagrams illustrating examples of displayed media selection menus; and
FIG. 5 is a perspective view illustrating a variation of the connection between the portable AV equipment and stationary AV equipment according to this embodiment.

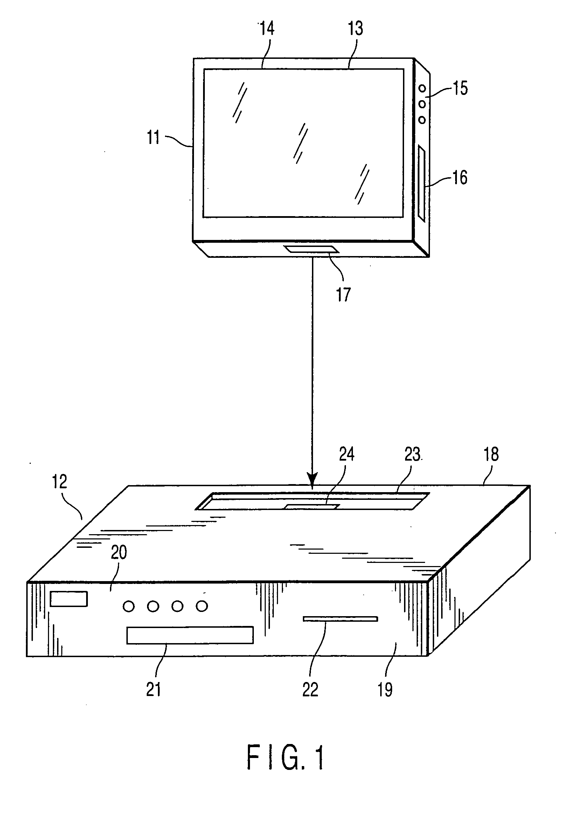

An embodiment of the present invention will be described below with reference to the drawings. FIG. 1 shows the appearance of an AV system described in this embodiment. This AV system is composed of portable AV equipment 11 and stationary AV equipment 12.

The portable AV equipment 11 has a housing 13 formed like a thin box. A display section 14 is installed on one plane of the housing 13. An operation section 15 and an installation section 16 in which a removable medium is installed are installed on one side of the housing 13. A connector 17 is installed on a bottom surface of the housing 13.

The stationary AV equipment 12 has a box-shaped housing 18. The housing 18 has a front pane 19. On the front panel 19, an operation section 20, a display section 21 and an installation section 22 are provided. The operation section 20 includes a power switch and the like. The installation section 22 holds a removable medium.

A mounting section 23 is formed in a top plate of the housing 18 so that a bottom surface portion of the housing 13 of the portable AV equipment 11 can be mounted in and removed from the mounting section 23. A connector 24 is installed in the middle of a bottom surface of the mounting section 23 and can be connected to the connector 17 of the portable AV equipment 11.

The bottom surface portion of the housing 13 of the portable equipment 11 is fitted into the mounting section 23 of the housing 18 of the stationary AV equipment 12 to mechanically couple the AV equipment 11 to the AV equipment 12. At this time, the connectors 17 and 24 are also connected together to electrically connect the AV equipment 11 and the AV equipment 12 together.

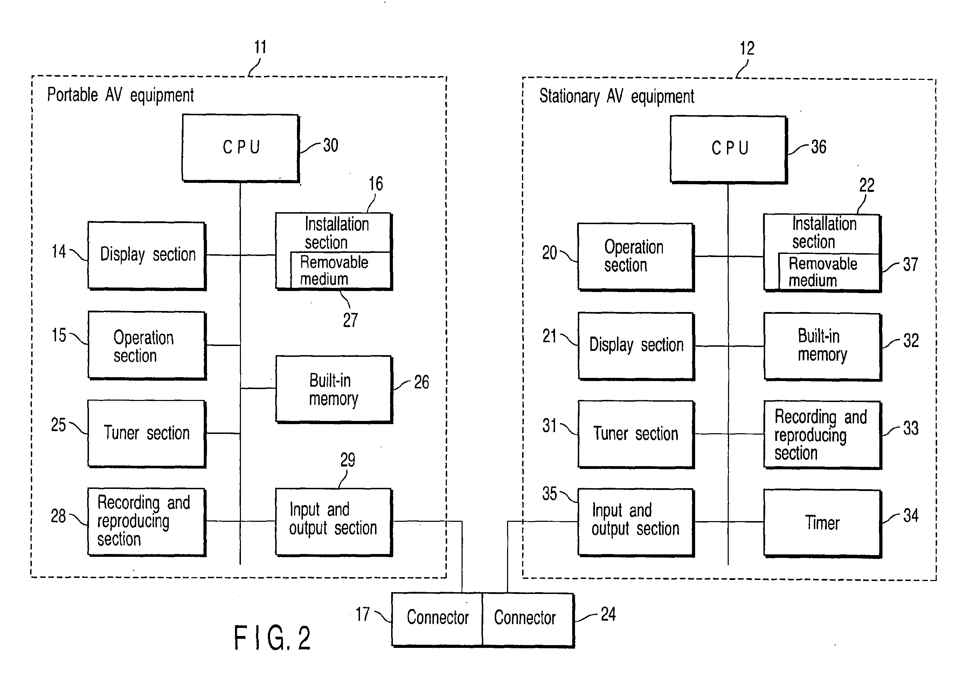

FIG. 2 shows is a block diagram illustrating the details of signal processing systems in the portable AV equipment 11 and stationary AV system 12. First, the portable AV equipment 11 comprises a tuner section 25, a built-in memory 26, a recording and reproducing section 28, an input and output section 29, and a central processing unit (CPU) 30, in addition to the display section 14, operation section 15, and installation section 16, described previously.

The tuner section 25 has a function of selecting a signal of a desired channel from satellite television broadcasting and terrestrial television broadcasting, demodulating the signal, and displaying the corresponding video on the display section 14. The built-in memory 26 is formed of, for example, a semiconductor memory.

The recording and reproducing section 28 has a function of recording and reproducing AV information in and from the removable medium 27 and built-in memory 26 installed in the installation section 16. The input and output section 29 has a function of receiving and outputting AV information, control information, or the like from and to external equipment via the connector 17. The CPU 30 integrally controls each section so as to reflect operation information obtained from the operation section 15.

On the other hand, the stationary AV equipment 12 comprises a tuner section 31, a built-in memory 32, a recording and reproducing section 33, a timer 34, an input and output section 35, and a CPU 36, in addition to the operation section 20, display section 21, and installation section 22, described previously.

The tuner section 31 has a function of selecting a signal of a desired channel from satellite television broadcasting and terrestrial television broadcasting and demodulating and outputting the signal to external equipment. The built-in memory 26 is formed of, for example, a hard disk drive (HDD). The timer 34 is utilized to reserve viewing or recording of television broadcasting.

The recording and reproducing section 33 has a function of recording and reproducing AV information on and from the removable medium 37 and built-in memory 32 installed in the installation section 32. The input and output section 35 has a function of receiving and outputting AV information, control information, or the like from and to external equipment via the connector 24. The CPU 36 integrally controls each section so as to reflect operation information obtained from the operation section 20.

The input and output sections 29 and 35 conform to the specifications of the universal serial bus (USB) MassStorage class connections. Specifically, the connection form of the portable AV equipment 11 and stationary AV equipment 12 has only to be such that their CPUs 30 and 36 can share their removable media 37 and 27 and the built-in memories 32 and 26.

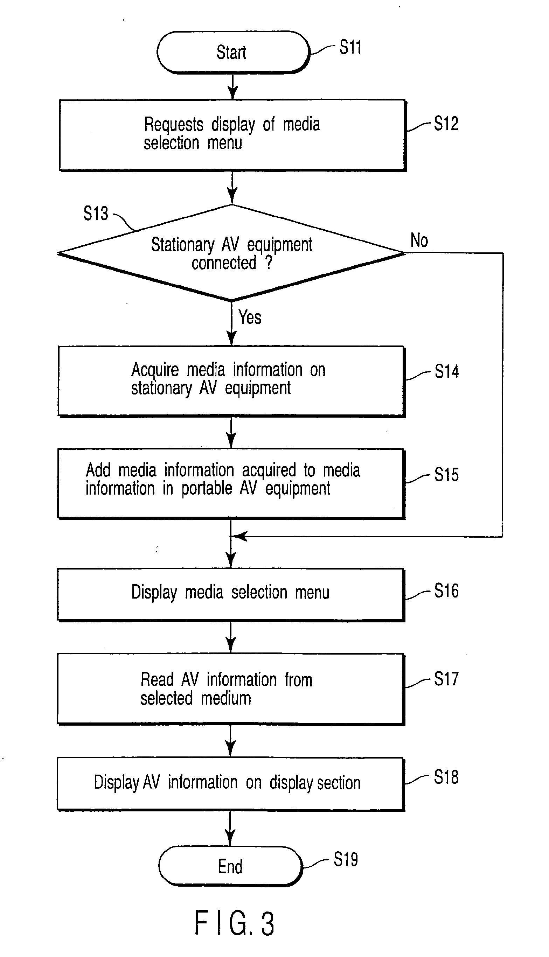

FIG. 3 is a flowchart schematically illustrating an example of an operation of the above AV system. First, the process is started (step S11). Then, if at step S12, a media selection menu is requested to be displayed for reproduction, then at step S13, the CPU 30 of the portable AV equipment 11 determines whether or not the stationary AV equipment 12 is connected to the portable AV equipment 11.

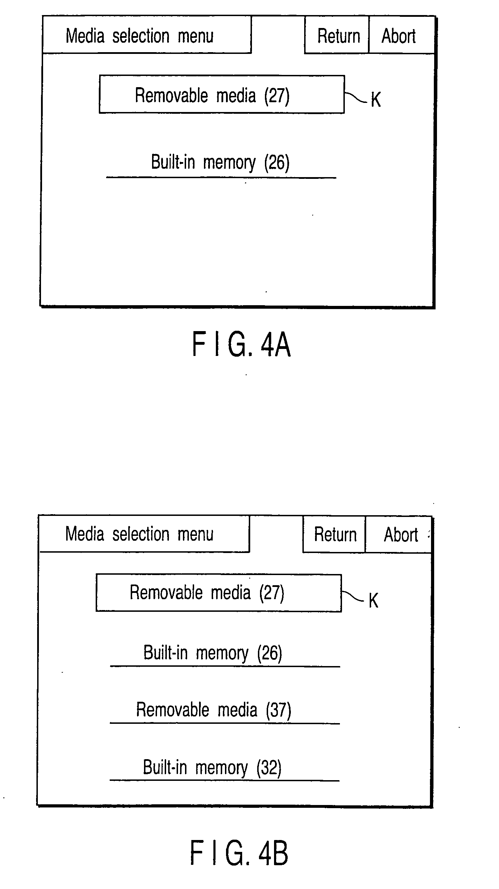

If the CPU 30 of the portable AV equipment determines that the stationary AV equipment 12 is not connected to the portable AV equipment 11 (NO), then at step S16, it causes the display section 14 to display the media selection menu. As shown in FIG. 4A, the media selection menu displays a list of recording media possessed by the portable AV equipment 11, i.e., the removable medium 27 and the built-in memory 26 so that a user can select either of them.

In the media selection menu, either the displayed "removable medium" 27 or "built-in memory" 26 can be selected using a frame-shaped cursor K. Thus, the user can operate the operating section 15 to move the cursor K to select and determine either the "removable medium" 27 or "built-in memory" 26.

Subsequently at step S17, the CPU 30 of the portable AV equipment 11 reads AV information from the selected medium. Then at step S18, the CPU 30 causes the display section 14 to display a video to finish the process (step S19).

On the other hand, if at step S13, described above, the CPU 30 of the portable AV equipment 11 determines that the stationary AV equipment 12 is connected to the portable AV equipment 11 (YES), then at step S14, it acquires media information possessed by the stationary AV equipment 12, i.e., information as to what recording medium is provided in the stationary AV equipment 12 (in this case, the removable medium 37 and the built-in memory 32).

Then at step S15, the CPU 30 of the portable AV equipment 11 adds the acquired media information (the removable medium 37 and built-in memory 32) possessed by the stationary AV equipment 12 to its own media information (removable medium 27 and built-in memory 26). At step S16, the CPU 30 causes the display section 14 to display the media selection menu.

In this case, as shown in FIG. 4B, the media selection menu displays a list of all of the removable media 27 and 37 and built-in memories 26 and 32 possessed by the portable AV equipment 11 and stationary AV equipment 12. Any of the media can be selected and determined from this list using the cursor K.

Subsequently at step S17, the CPU 30 of the portable AV equipment 11 reads AV information from the selected medium. Then at step S18, the CPU 30 causes the display section 14 to display a video to finish the process (step S19).

According to the above embodiment, the portable AV equipment 11 is operated to select either the removable medium 37 or built-in memory 32 of the stationary AV equipment 12 to read AV information recorded on the selected medium. The portable AV equipment 11 then causes the display section 14 to directly display the information.

The above arrangement eliminates the need to move AV information from the stationary AV equipment 12 to the portable AV equipment 11 via the removable medium as in the case with the prior art. The user can thus handle these pieces of equipment conveniently.

Furthermore, AV information acquired from the stationary AV equipment 12 is not recorded on the removable medium 27 or built-in memory 26 of the portable AV equipment 11. Accordingly, AV information can be acquired from the stationary AV equipment 12 regardless of the storage capacity of the removable medium 27 or built-in memory 26.

It is also possible to execute such control as records AV information obtained from the stationary AV equipment 12 on the removable medium 27 or built-in memory of the portable AV equipment 11.

The portable AV equipment 11 can select either the removable medium 37 or built-in memory 32 of the stationary AV equipment 12, in which AV information acquired from any of the tuner section 25, removable medium 27, and built-in memory 26 is subsequently recorded on its own selected medium.

Alternatively, the stationary AV equipment 12 may select the tuner section 25, removable medium 27 or built-in memory 26 of the portable AV equipment 11. In this case, the AV information acquired from the tuner section 25, removable medium 27 or built-in memory 26 is recorded in the removable medium 37 or built-in memory of the AV equipment 12.

In this case, the stationary AV equipment 12 can also directly supply a monitor or the like externally connected to it with AV information acquired from the portable AV equipment 11 and cause the monitor to display the AV information, without recording the information on its removable medium 37 or built-in memory 32.

Alternatively, the stationary AV equipment 12 can cause the display section 14 of the portable AV equipment 11 to display AV information acquired from either its removable medium 37 or built-in memory 32 or can select the removable medium 27 or built-in memory 26 of the portable AV equipment 11, in which the AV information is subsequently recorded.

Moreover, while the stationary AV equipment 12 has AV information recorded in the built-in memory 32, the AV information having been acquired by the tuner section 31, the portable AV equipment 11 can select the built-in memory 32 of the stationary AV equipment 12 to cause the stationary AV equipment 12 to read other AV information recorded in the built-in memory 32. The portable AV equipment 11 can then cause the display section 14 to display the read AV information. In this case, the AV information recorded in the built-in memory 32 can also be read and reproduced.

Alternatively, while the portable AV equipment 11 is causing the display section 14 to display AV information read from the built-in memory 32 of the stationary AV equipment 12, the stationary AV equipment 12 can edit other AV information recorded in the built-in memory 32.

Moreover, while the portable AV equipment 11 is causing the display section 14 to display AV information read from the built-in memory 32 of the stationary AV equipment 12, the stationary AV equipment 12 can read other AV information recorded in the built-in memory 32 and supply the AV information to a monitor or the like externally connected to it, which monitor then displays the information.

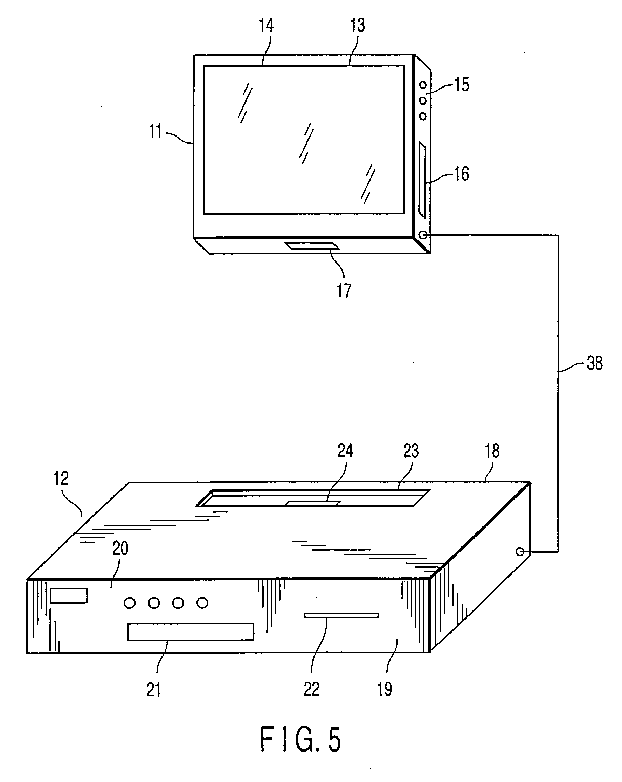

In the above embodiment, the portable AV equipment 11 is coupled directly to the stationary AV equipment 12. However, as shown in FIG. 5, the connection can be established via a cable 38 so as to form a network. Alternatively, the connection can be established by radio.

The present invention is not limited to the above embodiment. Variations may be made to the components of the embodiment for implementation without departing from the spirit of the invention. Furthermore, various inventions can be formed by properly combining a plurality of the components disclosed in the above embodiment. For example, some of the components shown in the embodiment may be omitted.

## Claims

1. A recording and reproducing apparatus **characterized by** comprising:
a connecting section (17, 24) configured to allow external AV equipment (11, 12) to be controllably connected to the recording and reproducing apparatus;
a selecting section (15, 20) configured to select one (27, 37) of recording media possessed by the external AV equipment (11, 12), via the connecting section (17, 24); and
a control section (30, 36) configured to record or reproduce AV information, via the connecting section (17, 24), on or from the recording medium (27, 37) selected by the selecting section (15, 20).

2. A recording and reproducing apparatus according to claim 1, **characterized in that** the selecting section (15, 20) comprises:
an acquiring section (30, 36) configured to acquire information on the recording media (27, 37) possessed by the external AV equipment (11, 12), via the connecting section (17, 24); and
a menu display section (14, 21) configured to display a menu allowing selection of one of (27, 37) the recording media possessed by the external AV equipment (11, 12), on the basis of the information acquired by the acquiring section (30, 36).

3. A recording and reproducing apparatus according to claim 1, **characterized in that** the control section (30, 36) acquires and displays AV information from the recording medium (27, 37) selected by the selecting section (15, 20), via the connecting section (17, 24).

4. A recording and reproducing apparatus according to claim 1, **characterized in that** the control section (30, 36) causes AV information reproduced by the control section (30, 36) to be recorded on the recording medium (27, 37) selected by the selecting section (15, 20), via the connecting section (17, 24).

5. A recording and reproducing apparatus according to claim 1, **characterized in that** the control section (30, 36) acquires AV information, via the connecting section (17, 24), from the recording medium (27, 37) selected by the selecting section (15, 20).

6. A recording and reproducing apparatus according to claim 1, **characterized in that** the control section (30, 36) causes AV information recorded on its recording medium (27, 37) to be recorded on the recording medium (27, 37) selected by the selecting section (15, 20).
